# EUROPEAN PATENT APPLICATION

(11) **EP 4 671 829 A1**
(43) Date of publication of application: **31.12.2025**
(21) Application number: 24183916.6
(22) Date of filing: 24.06.2024
(51) Int. Cl.: G01T 1/161

(54) **CAMERA**

(71) Applicant: Université de Genève - UNIGE, 1211 Genève (CH); Bruno Kessler Foundation, 38122 Trento (IT)
(72) Inventor: DELLA VOLPE, Domenico, 01630 Sergy (FR); ACERBI, Fabio, 38068 Rovereto (IT); GOLA, Alberto Giacomo, 38123 Trento (IT)
(74) Representative: KATZAROV S.A.

(57) **Abstract**

The present invention relates to a Wireless Portable imaging device comprising a detection module for collecting data destined to recreate a target image, a processing unit for processing the data collected by the detection module, a wireless communication module said processed data to remote display device, an embedded energy source capable of energizing the entire portable imaging device, and characterized in that the detection module comprises at least one position sensitive SiPM detector.

## Description

### Technical Field

The present invention relates to the field of medical imaging and more particularly to a camera destinated to medical imaging and even more particularly to a portable low-power wireless gamma, and optionally beta, radiation camera for radio-guided surgery imaging method.

### Background of the art

In current protocols, Lymph node biopsy is done before removal of cancer. Currently, in radio guided surgery probe are mostly used to identify the tumour/lesion/node (called later radio-target) to resect.

In general CT/SPECT/PET scan is done soon after radio-pharmaceutical administration, because the patient has to metabolise the radio tracer, and provided to the surgeons before the surgery. Once the surgery starts, the tissues and the radio target move. Therefore the surgeon needs to be find the lymph node again to remove it. The probes, provide an acoustic signal whose frequency of repetition is propositional to the radio-activity. The Search and find is done by inserting the probe and move it around, changing the probe orientation until the sound frequency is maximum. This procedure can be quite long and it is not the efficient.

There is therefore a need for the device and a method permitting to localize lymph nodes from the outside of the body up to few cm, in quite a short time, possibly directly in the surgery room.

In fact, there is a need for a device which addresses the known problem in node search for several type of cancer such as Lymph cancer, breast cancer, lung cancer and the same. The protocol requires that all nodes with an activity higher than 10% with respect to the one removed, must be removed as well. This is also a lengthy and complicated procedure, and surgeon experience plays a big role, as the search has to be done, without prior knowledge of the position and activity.

There is therefore a need for a device and a method permitting to scan a larger area and to identify more than one lymph-node at time providing the activity as well in a more quantitative way. As a matter of fact, already during the search of the most active lymph node, other lymph-nodes can be seen, and their activity checked reducing significantly the time for this search.

The result should have a beneficial impact on patient as the duration of anaesthesia is shortened as the search time is reduced.

### Summary of the invention

The above problems are solved by the present invention in the field of Medical Nuclear Physics and radio-guided surgery. The device of the present invention produces in-vivo medium-resolution images in real-time of tissue and small organs of humans and animals and it can be used by holding it by hand. The device is conceived for the localization of cancer/lesions in glands or organs as thyroid gland, kidneys, prostate, breasts, and lymph nodes. It is applicable to preliminary, intra-operative and postoperative diagnosis as well as functional studies.

More particularly, the present invention relates to a wireless and hand-able camera based on a position sensitive Silicon Photomultiplier (SiPM) detector, coupled with scintillator array, with its correction and reconstruction methods. This camera that can work with gamma radiation and beta radiation, by exchanging the detection head. The camera is based on position sensitive SiPM technology such that the camera field-of-view is scalable by increasing the array size (i.e. the number or the dimension of the detector chip used in an array form), and consequently the number of channels. One of the results is that the acquisition time, the refresh rate, the image contrast are tunable depending on the specific application and the end-user preferences. The camera can also be used for direct detection of beta emitter by changing the detection module, where the scintillating crystal is replaced by an organic one.

A first aspect of the invention is a compact low-power, Wireless Portable radiation imaging device, to be used in medical field to acquire on-field radiation images, which comprise a detection module for collecting data destined to recreate a target image, a processing unit for processing the data collected by the detection module, a wireless communication module said processed data to remote display device, an embedded energy source capable of energizing the entire portable imaging device, and characterized in that the detection module comprises at least one position sensitive single-photon sensitive detector.

Preferably, at least one sensitive single-photon sensitive detector is a SiPM detector.

According to a preferred embodiment of the present invention, the at least one position sensitive SiPM detector is a 3x3 SiPM array presenting eight channels.

Advantageously, the imaging device is a camera configured to generate and reconstruct gamma radiation.

Preferably, the embedded energy source comprises a rechargeable or replaceable battery pack.

Advantageously, the detection module further comprises an interchangeable gamma ray collimation system.

According to a preferred embodiment of the present invention, the interchangeable gamma ray collimation system presents a 30 x 30 pixels with a septa of 0.15 to 0.2 mm and holes of 0.8 mm x 0.8 mm.

Preferably, the detection module further comprises an interchangeable scintillating system.

Advantageously, for gamma radiation the scintillator is segmented in pixels, while for charged particle is of continuous type.

According to a preferred embodiment of the present invention, the detection module further comprises FEE electronics.

Advantageously, the processing unit is adapted to correct the gamma reconstruction by screening the detected gamma rays according to their energy.

Preferably, the screening step of the processing unit implies an automatic recognition method trained by a machine learning process implying gamma detection parameters.

More specifically the device and the method of the present invention may provide not only the position in x-y plan but also the depth, along a third coordinate z, of the node in the patient body.

### Brief description of the drawings

Further particular advantages and features of the invention will become more apparent from the following non-limitative description of at least one embodiment of the invention which will refer to the accompanying drawings, wherein:
- Figure 1 is a isometric view of the device of the present invention with transparent walls to see some of its component;
- Figure 2 is a block diagram showing of the device of the present invention, and
- Figure 3 is a block diagram showing the collimator of the device of the present invention ,

### Detailed description of the invention

The present detailed description is intended to illustrate the invention in a non-limitative manner since any feature of an embodiment may be combined with any other feature of a different embodiment in an advantageous manner.

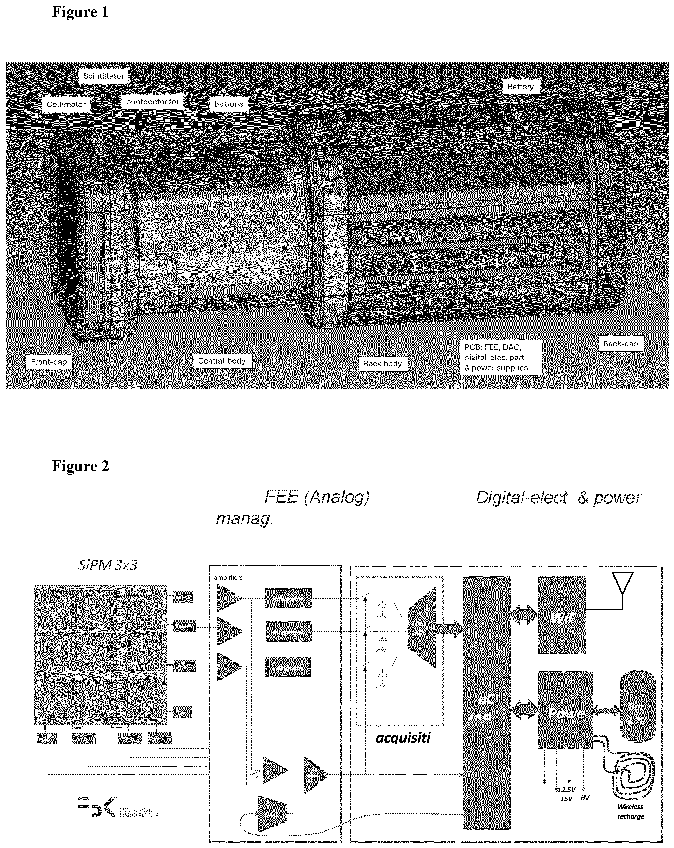

Figure 1 shows an example of the miniaturized camera embodiment of the present invention which is a device where all the necessary physical and electronic systems have been integrated together with the sensor head, forming a compact piece of stand-alone equipment without the need for any other additional electronic system, and which can be connected wirelessly to any standard computer or compatible device where its imaging software runs.

Figure 2 represents the device which is preferably a wireless portable camera configured to generate and reconstruct gamma radiation comprising a detection module for collecting data destined to recreate a target image, a processing unit for processing the data collected by the detection module, a wireless communication module said processed data to remote display device, and an embedded energy source capable of energizing the entire portable imaging device, such as a rechargeable or replaceable battery pack.

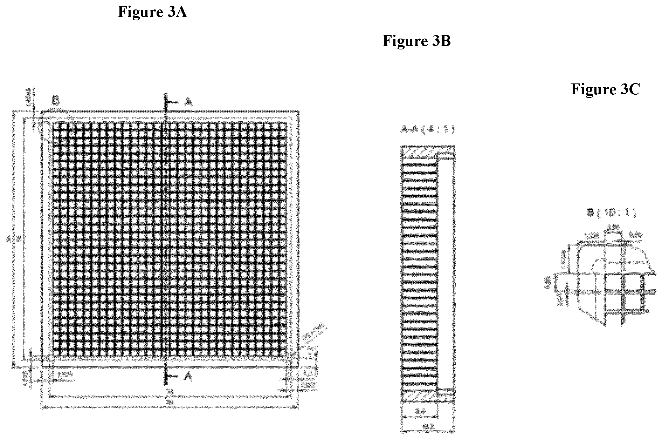

The detection module comprises at least one position sensitive single-photon detector, like a position-sensitive silicon-photomultiplier (SiPM) detector, coupled with an interchangeable block composed by a scintillator array and a collimation system. Specifically (but not limited to) the collimation system is represented in Figure 3 which can be of the dimension of 30 x 30 pixels with a septa of 0.2 mm and holes of 0.9 mm x 0.9 mm. The scintillator crystal comprises a scintillator which, for gamma radiation, is segmented in pixels, while for charged particle is of continuous type.

The detection module also further comprises a detection system comprising a position sensitive semiconductor light detector, with its front-end analogue electronics, and FEE electronics for processing the signal coming from the front-end, and reconstruct raw images from them.

The detection module can detect gamma radiation or beta radiation, reconstructing the interaction position and the amount of energy of the incoming particles. This means that it can solve the following technical problem. The gamma rays are absorbed by the Scintillator which in turns produces some light that the sensor records. This means that one just knows where it has been absorbed, in which pixel, but this is a discrete point, so no one can say where it came from since there are infinite lines through a single point.

By using the SiPM here with the collimator, one allows only gamma rays that are almost parallel to the collimator to reach the scintillator, and therefore one can say that from the fired pixel, the gamma rays shall come from a straight line defined by the collimator hole.

It is the collimator which selects directions of gamma rays that can be absorbed, allowing to reconstruct their direction and once one has enough gamma rays, one can reconstruct an image.

In reality, as some gamma rays with a 'wrong' direction can be scattered on the collimator and reach the scintillator, there is also a need to enhance the quality of the signal. To do so the processing unit is adapted to correct the gamma reconstruction by screening the detected gamma rays according to their energy. Indeed, these wrong gamma rays lose energy in the scattering, and so, if one also records the energy of the gamma rays, one can identify them and reject them from the image.

Of course, this screening method has been improved and is now using an artificial intelligence model which has been trained with an automatic recognition method trained by a machine learning process implying gamma rays detection parameters.

An example of use relates to Lymph node biopsy where the present invention permits localizing lymph nodes the from outside up to few cm in quite a short time allows to scan a larger area and identify more than one lymph-node at a time and provides the activity as well in a more quantitative way.

Another example of use relates to Brain tumour surgery.

Conventional Beta rays are unstable and decay in interacting with the tissue producing a pair of back-to-back gamma-rays. This is why so far beta-cameras are not used in radio-guided surgery. However, in superficial tumours of the brain as gliomas, the beta camera can work in contact with the tissue and directly detect beta rays. This can be extremely useful in situation where most advanced technique like Stereotactic radio surgery, Endoscopic brain surgery, Gamma Knife etc, are not available. The extremely good spatial resolution allows also to reduce significantly the resection margin, reducing to the minimum needed, allowing also to have in real-time a check that all malignant tissue has been removed.

In a third example of use of the invention, the imaging device of the present invention can be used in precision agriculture (PA).

Although techniques like hyperspectral imaging are already considered, none currently provide information about the mechanisms of water and nutrient transport within a tree trunk. In contrast, the inventors have realized that gamma-ray technology, due to its high penetration capability, can potentially image a tree from the inside.

In precision agriculture (PA) for fruit production, knowing the time needed to transport water and nutrients from the root to the leaf is crucial. Fruit growth is significantly influenced by transpiration and water absorption at key moments during the day. Understanding this timing, combined with environmental parameters, allows for fine-tuning the process to enhance fruit development, increase the quantity of high-quality fruit, and significantly reduce the amount of water needed for proper growth. The impact is evident from both a sustainability perspective and an economic one, as it can improve the quality and yield of the fruit while conserving water resources. Technetium used in Radiographic Scanning (RGS) can also be administered to plants. As an isotope with a very short half-life, it can be easily eliminated by re-watering the plants afterward. Therefore, the imaging device of the present invention can be installed for a plant with several such devices and measure the time and water flow, providing accurate information to plant biologists. This can be done in the field, where such studies are generally difficult to perform, as the imaging device of the present invention is portable and can operate on battery power or with a small solar panel.

However, the present invention goes further. Pests, fungi, bacteria, and other microorganisms (collectively referred to as illnesses) affect plants in various ways, from ruining the fruit to killing the plants. For instance, the Xylella crisis in recent years has severely impacted the Mediterranean region.

In this example, one produces a technetium radio-tracer based on a molecule that can be metabolized by the illnesses. One can then image the plant with the imaging device of the present invention. Scaling up the imaging area to 20x20 cm, for example is achievable with this technology, as sub millimetric precision is not needed for the whole plant.

This permits early detection of the presence of the harmful component in the plant, which is often the only way to fight them and save the plant.

One can push the concept even further by using the same molecule to deliver more aggressive radio-tracers that can kill the illness. This would be analogous to plant chemotherapy. With a double radio-tracer approach combined with the use of the imaging device of the present invention, it is possible to pursue a theragnostic strategy, simultaneously treating and tracking the absorption and death of the harmful agents. One of the main benefits of this technique is that it can halt the proliferation of illnesses spread by insects, which are often the vectors for widespread plant diseases, such as the Xylella crisis.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

## Claims

1. A compact low-power, Wireless Portable radiation imaging device, to be used in medical field to acquire on-field radiation images, which comprise:
a detection module for collecting data destined to recreate a target image,
a processing unit for processing the data collected by the detection module,
a wireless communication module said processed data to remote display device,
an embedded energy source capable of energizing the entire portable imaging device, and
**characterized in that** the detection module comprises at least one position sensitive single-photon sensitive detector.

2. Compact low-power, Wireless Portable radiation imaging device according to claim 1, **characterized in that** the at least one sensitive single-photon sensitive detector is a SiPM detector.

3. Compact low-power, Wireless Portable radiation imaging device according to any one of claims 1 or 2, **characterized in that** the at least one position sensitive SiPM detector is a 3x3 SiPM array presenting eight channels.

4. Compact low-power, Wireless Portable radiation imaging device according to any one of claims 1 to 3, **characterized in that** the imaging device is a camera configured to generate and reconstruct gamma radiation.

5. Compact low-power, Wireless Portable radiation imaging device according to any one of claims 1 to 4, **characterized in that** the embedded energy source comprises a rechargeable or replaceable battery pack.

6. Compact low-power, Wireless Portable radiation imaging device according to any one of claims 1 to 5, **characterized in that** the detection module further comprises an interchangeable gamma ray collimation system.

7. Compact low-power, Wireless Portable radiation imaging device according to any one of claims 1 to 6, **characterized in that** the interchangeable gamma ray collimation system presents a 30 x 30 pixels with a septa of 0.15 to 0.2 mm and holes of 0.8 mm x 0.8 mm.

8. Compact low-power, Wireless Portable radiation imaging device according to any one of claims 1 to 7, **characterized in that** the detection module further comprises an interchangeable scintillating system.

9. Compact low-power, Wireless Portable radiation imaging device according to any one of claims 1 to 8, **characterized in that** for gamma radiation the scintillator is segmented in pixels, while for charged particle is of continuous type.

10. Compact low-power, Wireless Portable radiation imaging device according to any one of claims 1 to 9, **characterized in that** the detection module further comprises FEE electronics.

11. Compact low-power, Wireless Portable radiation imaging device according to any one of claims 1 to 10, **characterized in that** the processing unit is adapted to correct the gamma reconstruction by screening the detected gamma rays according to their energy.

12. Compact low-power, Wireless Portable radiation imaging device according to claim 11, **characterized in that** the screening step of the processing unit implies an automatic recognition method trained by a machine learning process implying gamma detection parameters.
